# FASCICULE DE BREVET EUROPEEN

(11) **EP 0 660 005 B1**
(45) Date de publication et mention de la délivrance du brevet: **17.11.1999**
(21) Numéro de dépôt: 94402964.4
(22) Date de dépôt: 21.12.1994
(51) Int. Cl.: F16F 1/368, B60G 11/08

(54) **Lame de suspension en matière composite de véhicule automobile**
Blattfeder aus Verbundwerkstoff für Kraftfahrzeugaufhängung
Composite material leaf spring for motor vehicle suspension

(30) Priorité: 24.12.1993 FR 9315630
(43) Date de publication de la demande: 28.06.1995
(73) Titulaire: Société Anonyme dite: REGIE NATIONALE DES USINES RENAULT, 92109 Boulogne Billancourt (FR)
(72) Inventeur: Demaldent, Jean-Michel, F-78580 Maule (FR); Simon, Henri, F-92500 Rueil-Malmaison (FR); Lardeur, Pascal, F-92500 Rueil Malmaison (FR)

(56) Documents cités:
- EP-A- 0 225 485
- EP-A- 0 243 102
- EP-A- 0 436 407
- DE-B- 1 231 967
- GB-A- 2 211 913
- US-A- 3 968 958
- US-A- 4 414 049

## Description

L'invention concerne une lame de suspension en matière composite reliant transversalement deux roues d'un même essieu de véhicule automobile.

L'invention concerne plus particulièrement une lame de suspension qui possède au moins un renfort extérieur à base de fibres unidirectionnelles réparties entre une zone centrale et deux zones d'extrémité inclinées vers ladite zone centrale.

La publication FR-A-2 656 838 décrit une lame de suspension en matière composite qui possède une zone centrale et deux zones d'extrémité, chacune de ces zones d'extrémité possédant deux points de fixation de fibres, et un renfort constitué par des fibres reliant un point de fixation d'une zone d'extrémité au point de fixation opposé de l'autre zone d'extrémité et respectivement de sorte que les fibres se croisent et forment entre elles un angle α déterminé.

Cette disposition particulière des fibres entraîne une tendance à la rupture lors de sollicitations mécaniques de la lame, notamment lorsque sont exercées sur la lame des contraintes de cisaillement.

La publication GB-A-2 211 913 décrit une lame de suspension qui possède les mêmes trois zones précitées et un renfort constitué par des fibres rectilignes superposées avec pour chaque couche ainsi réalisée une direction différente. Cette superposition apparaît en particulier dans les zones soumises à des contraintes, notamment de cisaillement, très importantes.

La structure multi-directionnelle croisée des fibres ainsi réalisée engendre une diminution de la tenue en fatigue du renfort dans les zones de jonction des fibres, certaines de ces fibres n'étant pas en effet orientées dans la direction de transmission des efforts imposés à la lame de suspension.

L'invention a pour objet une lame en matière composite qui possède un renfort de verre constitué notamment par des fibres continues flexibles qui lui permettent d'améliorer considérablement sa résistance mécanique à la fatigue.

L'invention a également pour objet une lame dont la résistance aux efforts mécaniques est accrue dans les zones soumises à de fortes déformations, qui sont en particulier les zones d'extrémité.

Une lame de suspension selon l'invention est définie par les caractéristiques de la revendication 1.

D'autres avantages et caractéristiques de la description apparaîtront à la lecture d'un exemple de réalisation d'une lame de suspension constituée par un renfort de fibres unidirectionnelles et un mat de verre, en référence au dessin dans lequel :
- la figure 1 est une représentation perspective de la lame de suspension,
- la figure 2 est une section longitudinale partielle du détail II de la figure 1 représentant l'empilement des fibres aux extrémités de la lame,
- la figure 3 est une section longitudinale d'une variante du mode de réalisation de l'empilement représenté à la figure 2,
- la figure 4 est une section longitudinale d'un second mode de réalisation de l'empilement représenté à la figure 2,
- la figure 5 est une section longitudinale d'une variante du mode de réalisation de l'empilement représenté à la figure 4,
- la figure 6 est une section longitudinale d'un troisième mode de réalisation de l'empilement représenté à la figure 2,
- la figure 7 est une section longitudinale d'une variante du mode de réalisation de l'empilement représenté à la figure 6.

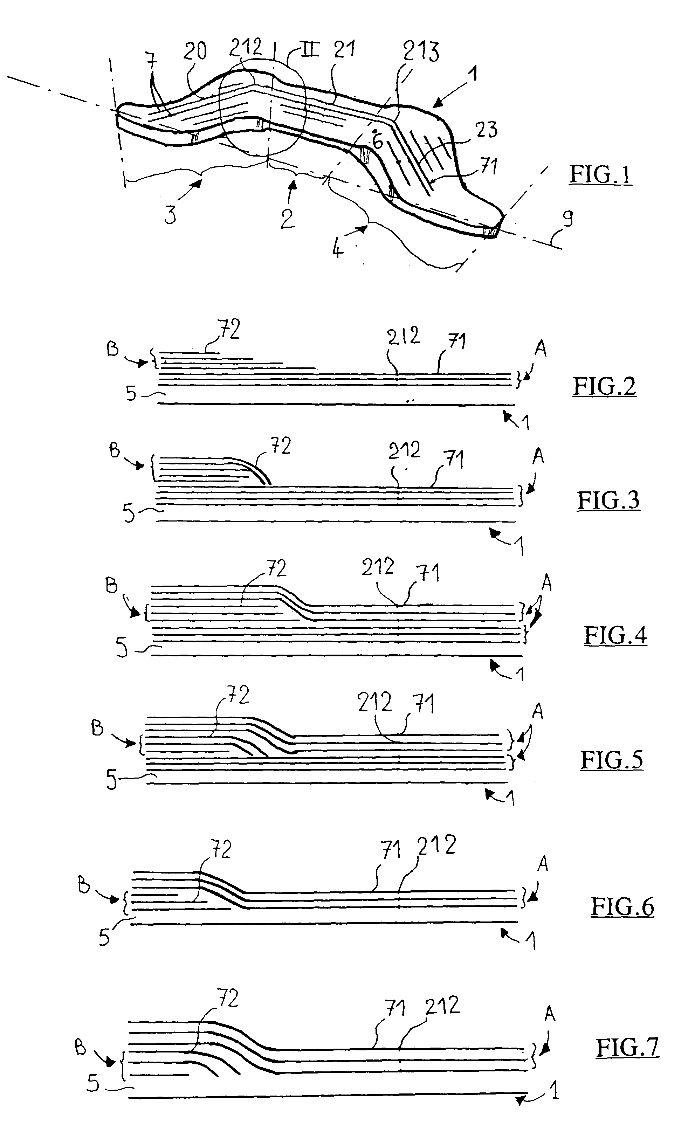

Selon la figure 1, la lame de suspension 1 en matière composite relie transversalement deux roues d'un même essieu de véhicule automobile, qui possède une zone centrale 2 et deux zones d'extrémité 3 et 4 inclinées vers ladite zone 2.

La lame de suspension 1 est constituée par un renfort extérieur 6 à base de fibres unidirectionnelles 7 et par un mat de verre 5 qui possède la même symétrie de position dans la lame 1 que le renfort 6.
Sans sortir du cadre de l'invention, on peut envisager que la lame de suspension 1 soit renforcée par plusieurs mats de verre 5.

L'épaisseur du renfort 6 est identique sur les deux faces de la lame 1 définissant ainsi un plan de symétrie pour la lame 1.

Les fibres 7 du renfort 6 sont parallèles entre elles et suivent la forme de la lame 1 de sorte que les lignes tangentes, non représentées, aux fibres 7 aux différents points de celles-ci forment avec l'axe 9 de l'essieu du véhicule un angle compris entre 0° et 60°.

Selon la figure 1, la lame 1 possède une forme en Ω, bien entendu cette réalisation de la lame n'est citée qu'à titre d'exemple et n'est donc en aucun cas limitative.

Les fibres utilisées pour l'invention peuvent être directement déposées sur la surface du renfort par des technologies connues décrites dans la publication "Technical Paper Owens Corning Fiberglas", Journée Européenne des Composites, Paris 1991.

Cependant on utilisera de préférence des fibres unidirectionnelles de verre continues sous forme d'un réseau très orienté dans l'axe principal constitué par lesdites fibres de verre sous la forme d'une nappe plane, rendues solidaires par une chaînette polyester. A titre d'exemple la lame peut être réalisée à partir d'une nappe plane formée de fibres de verre de référence commerciale P-139 de la société VETROTEX, et d'une résine constituée par le système de référence commerciale D.E.H.* *: marque de fabrique The DOW Chemical Co.. 39 et D.E.R. * 332,

Ce réseau permet d'obtenir à la fois les caractéristiques de flexibilité et de résistance au cisaillement nécessaires au renfort conforme à l'invention.

Les fibres 7 du renfort 6 forment un empilement stratifié dont certaines strates sont constituées de fibres continues 71 qui s'étendent d'une zone d'extrémité 3 à l'autre 4 de la lame 1, comme le montrent les différentes figures où sont représentés différents types d'empilements dans un des demi-plans délimité par le plan de symétrie de la lame 1, cet empilement étant reproduit de manière symétrique dans l'autre demi-plan non représenté délimité par ledit plan de symétrie.

Ces fibres 71 possèdent une configuration courbe constituée par trois segments rectilignes 20, 21, et 23 dirigés le long de la zone centrale 2 et des zones d'extrémité 3 et 4, les points de jonction 212 et 213 de ces segments 20, 21 et 23 étant situés dans ladite zone centrale 2 à proximité desdites zones d'extrémité 3 et 4.

En effet les points de jonction 212 et 213 constituent une zone de plus faible résistance du renfort 6, cette zone doit correspondre à une zone subissant les plus faibles contraintes de cisaillement.

L'empilement stratifié possède une épaisseur qui croît de la zone centrale 2 vers les zones d'extrémité 3 et 4.
Cette variation d'épaisseur de l'empilement dans le sens croissant est amorcée au delà de la zone de jonction des segments 20, 21 et 23 des fibres 71.

Ainsi l'épaisseur de l'empilement est maximun aux zones d'extrémité 3 et 4 de la lame qui sont soumises à des contraintes beaucoup plus importantes que dans la zone centrale 2 et qui nécessitent donc une résistance supérieure du renfort 6.

L'empilement aux zones d'extrémité 3 et 4 est réalisée par une combinaison de strates de configurations différenciées constituées par un premier ensemble A de fibres continues courbes 71 s'étendant d'une zone d'extrémité à l'autre de la lame 1 et par un deuxième ensemble B de fibres continues 72 ne recouvrant qu'une zone d'extrémité 3 ou 4 de la lame 1.

Cet empilement aux zones d'extrémité 3 et 4 peut être réalisé à partir du mat de verre, c'est à dire dans le sens intérieur-extérieur de la lame, selon quatre modes de réalisation différents :
- selon un premier mode de réalisation représenté à la figure 2, l'empilement est constitué par une succession d'un ensemble A recouvert d'un ensemble B,
- selon un second mode de réalisation représenté à la figure 4, l'empilement est constitué par une succession d'un ensemble A, d'un ensemble B et à nouveau d'un ensemble A,
- selon un troisième mode de réalisation représenté à la figure 6, l'empilement est constitué par une succession d'un ensemble B et d'un ensemble A.

Les figures 2, 4 et 6 présentent respectivement les trois modes de réalisation ci-dessus pour lesquels les fibres 72 constituant les ensembles B ont des longueurs décroissantes vers l'extérieur de la lame 1.

Une variante de ces trois modes de réalisation est représentée respectivement pour lesdits trois modes aux figures 3, 5 et 7, où les fibres 72 ont des longueurs croissantes vers l'extérieur de la lame 1 de sorte que les fibres intérieures de l'ensemble B soient enveloppées par les fibres extérieures.

Bien entendu d'autres variantes de ces trois modes de réalisation peuvent être envisagées.
Le choix entre ces différents modes de réalisation dépend de l'intensité des efforts auxquels la lame de suspension 1 doit être soumise.

Selon des variantes de réalisation non représentées de l'invention, la lame de suspension peut être constituée par diverses combinaisons de renforts 6 et de mat de verre 5.

## Revendications

1. Lame de suspension (1) en matière composite reliant transversalement deux roues d'un même essieu de véhicule automobile, qui possède au moins un renfort extérieur (6) à base de fibres unidirectionnelles (7) réparties entre une zone centrale (2) et deux zones d'extrémité (3, 4) inclinées vers ladite zone centrale (2), et dans laquelle les fibres (7) du renfort sont parallèles entre elles et suivent la forme de la lame de sorte que les lignes tangentes aux fibres (7) aux différents points de celles-ci forment avec l'axe de l'essieu (9) du véhicule un angle compris entre 0° et 60°, caractérisée en ce que les fibres (7) du renfort forment un empilement stratifié dont certaines strates sont constituées de fibres continues (71) qui s'étendent d'une zone d'extrémité (3) à l'autre (4) de la lame (1).

2. Lame selon la revendication 1, caractérisée par le fait que l'empilement stratifié possède une épaisseur qui croît de la zone centrale (2) vers les zones d'extrémité (3, 4).

3. Lame selon l'une quelconque des revendications 1 ou 2, caractérisée par le fait que les fibres (71) s'étendant d'une zone d'extrémité (3) à l'autre (4) de la lame (1) possèdent une configuration courbe constituée par trois segments (20, 21, 23) rectilignes dirigés le long de la zone centrale (2) et des zones d'extrémités (3, 4), les points de jonction (212, 213) de ces segments (20, 21, 23) étant situés dans ladite zone centrale (2) à proximité desdites zones d'extrémité (3, 4).

4. Lame selon l'une quelconque des revendications 1 à 3, caractérisée par le fait que la variation d'épaisseur de l'empilement dans le sens croissant est amorcée au delà de la zone de jonction des segments (20, 21, 23) des fibres (71) s'étendant d'une zone d'extrémité (3) à l'autre (4) de la lame (1).

5. Lame selon l'une quelconque des revendications 1 à 4, caractérisée par le fait que l'empilement aux zones d'extrémité (3, 4) de la lame (1) est réalisé par une combinaison de strates de configurations différenciées constituées par un premier ensemble (A) de fibres continues courbes (71) s'étendant d'une zone d'extrémité (3) à l'autre (4) de la lame (1) et par un deuxième ensemble (B) de fibres continues (72) ne recouvrant qu'une zone d'extrémité (3, 4) de la lame (1).

6. Lame selon l'une quelconque des revendications 1 à 5, caractérisée par le fait que l'empilement aux zones d'extrémité (3, 4) de la lame (1) est constitué par une succession d'un premier ensemble (A) recouvert d'un deuxième ensemble (B).

7. Lame selon l'une quelconque des revendications 1 à 5, caractérisée par le fait que l'empilement aux zones d'extrémité (3, 4) de la lame (1) est constitué par respectivement une succession d'un premier ensemble (A), d'un deuxième ensemble (B) et à nouveau d'un premier ensemble (A).

8. Lame selon l'une quelconque des revendications 1 à 5, caractérisée par le fait que l'empilement aux zones d'extrémité (3, 4) de la lame (1) est constitué par respectivement une succession d'un deuxième ensemble (B) et d'un premier ensemble (A).

9. Lame selon la revendication 1, caractérisée par le fait que l'épaisseur du renfort (6) est identique sur les deux faces de la lame (1).

10. Lame selon l'une quelconque des revendications 1 à 9, caractérisée par le fait que la lame (1) est renforcée par au moins un mat de verre (5) qui possède la même symétrie de position dans la lame (1) que le renfort (6).

## Patentansprüche

1. Blattfeder (1) aus Verbundwerkstoff für eine Kraftfahrzeug-Aufhängung, welche zwei Räder derselben Achse eines Kraftfahrzeuges in Querrichtung verbindet, mit wenigstens einer Außenverstärkung (6) aus gleichgerichteten Fasern (7), die zwischen einem Mittenbereich (2) und zwei zum Mittenbereich (2) hin geneigten Endbereichen (3, 4) verteilt sind und wobei die Fasern (7) der Verstärkung parallel zueinander sind und der Form der Feder derart folgen, dass die zu den Fasern (7) an verschiedenen Stellen angelegten tangentialen Linien mit der Achse (9) der Kraftfahrzeugachse einen Winkel zwischen 0° und 60° einschließen, dadurch gekennzeichnet, dass die Fasern (7) der Verstärkung einen geschichteten Stapel bilden, bei dem einzelne Schichten aus durchgehenden Fasern (71) bestehen, die sich von einem Endbereich (3) bis zum anderen Endbereich (4) der Blattfeder (1) erstrecken.

2. Blattfeder nach Anspruch 1, dadurch gekennzeichnet, dass der geschichtete Stapel eine Dicke aufweist, welche vom Mittenbereich (2) in Richtung der Endbereiche (3, 4) zunimmt.

3. Blattfeder nach einem der Ansprüche 1 oder 2, dadurch gekennzeichnet, dass die Fasern (71), die sich von einem Endbereich (3) zum anderen Endbereich (4) der Blattfeder (1) erstrecken, einen gekrümmten Aufbau aufweisen, der aus drei geradlinigen Segmenten (20, 21, 23) besteht, die entlang des Mittenbereichs (2) und der Endbereiche (3, 4) ausgerichtet sind, wobei die Verbindungsstellen (212, 213) der Segmente (20, 21, 23) im Mittenbereich (2) in der Nähe der Endbereiche (3, 4) angeordnet sind.

4. Blattfeder nach einem der Ansprüche 1 bis 3, dadurch gekennzeichnet, dass die Variation der Dicke des Stapels in zunehmender Richtung außerhalb des Verbindungsbereichs der Segmente (20, 21, 23) der Fasern (71) beginnt, die sich von einem Endbereich (3) zum anderen Endbereich der Blattfeder (1) erstrecken.

5. Blattfeder nach einem der Ansprüche 1 bis 4, dadurch gekennzeichnet, dass der Stapel in den Endbereichen (3, 4) der Blattfeder (1) aus einer Kombination von Schichten verschiedener Aufbauten besteht, bestehend aus einer ersten Anordnung (A) aus durchgehenden gekrümmten Fasern (71), die sich von einem Endbereich (3) zum anderen Endbereich (4) der Blattfeder (1) erstrecken und aus einer zweiten Anordnung (B) aus durchgehenden Fasern (72), die nur einen der Endbereiche (3, 4) der Blattfeder (1) bedeckt.

6. Blattfeder nach einem der Ansprüche 1 bis 5, dadurch gekennzeichnet, dass der Stapel in den Endbereichen (3, 4) der Blattfeder (1) gebildet wird durch eine Folge aus einer ersten Anordnung (A), die von einer zweiten Anordnung (B) bedeckt ist.

7. Blattfeder nach einem der Ansprüche 1 bis 5, dadurch gekennzeichnet, dass der Stapel in den Endbereichen (3, 4) der Blattfeder (1) gebildet wird durch eine Folge aus einer ersten Anordnung (A), einer zweiten Anordnung (B) und erneut einer ersten Anordnung (A).

8. Blattfeder nach einem der Ansprücne 1 bis 5, dadurch gekennzeichnet, dass der Stapel in den Endbereichen (3, 4) der Blattfeder (1) gebildet wird durch eine Folge aus einer zweiten Anordnung (B) und einer ersten Anordnung (A) .

9. Blattfeder nach Anspruch 1, dadurch gekennzeichnet, dass die Dicke der Verstärkung (6) identisch auf beiden Seiten der Blattfeder ist.

10. Blattfeder nach einem der Ansprüche 1 bis 9, dadurch gekennzeichnet, dass die Blattfeder (1) durch wenigstens eine Glasmatte (5) verstärkt ist, welche die gleiche Stellungssymmetrie in der Feder wie die Verstärkung (6) aufweist.

## Claims

1. A suspension leaf (1) of composite material transversely connecting two wheels of a same automobile vehicle axle, comprising at least one external reinforcement (6) based on monodirectional fibres (7) distributed between a central zone (2) and two end zones (3, 4) inclined towards this central zone (2) and in which the fibres (7) of the reinforcement are parallel to one another and follow the shape of the leaf such that the lines tangential to the fibres (7) at the various points thereof form an angle of between 0° and 60° with the axis of the axle (9) of the vehicle, characterised in that the fibres (7) of the reinforcement form a stratified stack, some strata of which are formed by continuous fibres (71) which extend from one end zone (3) to the other (4) of the leaf (1).

2. A leaf as claimed in claim 1, characterised in that the stratified stack has a thickness that increases from the central zone (2) towards the end zones (3, 4).

3. A leaf as claimed in any one of claims 1 or 2, characterised in that the fibres (71) extending from one end zone (3) to the other (4) of the leaf (1) have a curved configuration formed by three rectilinear segments (20, 21, 23) directed along the central zone (2) and the end zones (3, 4), the junction points (212, 213) of these segments (20, 21, 23) being situated in the central zone (2) in the vicinity of the end zones (3, 4).

4. A leaf as claimed in any one of claims 1 to 3, characterised in that the variation of the thickness of the stack in the increasing direction starts beyond the zone of junction of the segments (20, 21, 23) of the fibres (71) extending from one end zone (3) to the other (4) of the leaf (1).

5. A leaf as claimed in any one of claims 1 to 4, characterised in that the stack at the end zones (3, 4) of the leaf (1) is formed by a combination of strata of different configurations formed by a first set (A) of curved continuous fibres (71) extending from one end zone (3) to the other (4) of the leaf (1) and by a second set (B) of continuous fibres (72) covering only one end zone (3, 4) of the leaf (1).

6. A leaf as claimed in any one of claims 1 to 5, characterised in that the stack at the end zones (3, 4) of the leaf (1) is formed by a sequence of a first set (A) covered by a second set (B).

7. A leaf as claimed in any one of claims 1 to 5, characterised in that the stack at the end zones (3,4) of the leaf (1) is formed respectively by a sequence of a first set (A), a second set (B) and a further first set (A).

8. A leaf as claimed in any one of claims 1 to 5, characterised in that the stack at the end zones (3, 4) of the leaf (1) is formed respectively by a sequence of a second set (B) and a first set (A).

9. A leaf as claimed in claim 1, characterised in that the thickness of the reinforcement (6) is identical on both surfaces of the leaf (1).

10. A leaf as claimed in any one of claims 1 to 9, characterised in that the leaf (1) is reinforced by at least one glass mat (5) which has the same positional symmetry in the leaf (1) as the reinforcement (6).
